(19) Europäisches Patentamt
European Patent Office
Office européen des brevets

(11) **EP 4 174 447 B1**

(12) **EUROPÄISCHE PATENTSCHRIFT**

(45) Veröffentlichungstag und Bekanntmachung des Hinweises auf die Patenterteilung:
**31.01.2024   Patentblatt 2024/05**

(21) Anmeldenummer: **22201035.7**

(22) Anmeldetag: **12.10.2022**

(51) Internationale Patentklassifikation (IPC):
***G01D 5/347*** *(2006.01)*

(52) Gemeinsame Patentklassifikation (CPC):
**G01D 5/34715**

(54) **OPTISCHE POSITIONSMESSEINRICHTUNG UND VERFAHREN ZUM BETRIEB EINER OPTISCHEN POSITIONSMESSEINRICHTUNG**

OPTICAL POSITION MEASURING DEVICE AND METHOD FOR OPERATING AN OPTICAL POSITION MEASURING DEVICE

DISPOSITIF OPTIQUE DE MESURE DE POSITION ET PROCÉDÉ DE FONCTIONNEMENT D'UN DISPOSITIF OPTIQUE DE MESURE DE POSITION

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **29.10.2021   DE 102021212224**

(43) Veröffentlichungstag der Anmeldung:
**03.05.2023   Patentblatt 2023/18**

(73) Patentinhaber: **Dr. Johannes Heidenhain GmbH 83301 Traunreut (DE)**

(72) Erfinder:
- **FRESE, Daniel**
  **83278 Traunstein (DE)**
- **ROSENLEHNER-EMDE, Jannik Jens**
  **83119 Obing (DE)**
- **Weis, Stefan**
  **83374 Traunwalchen (DE)**

(56) Entgegenhaltungen:
**EP-A1- 2 738 524     DE-A1-102004 024 581**

EP 4 174 447 B1

**Beschreibung**

GEBIET DER TECHNIK

Die vorliegende Erfindung betrifft eine optische Positionsmesseinrichtung sowie ein Verfahren zum Betrieb einer optischen Positionsmesseinrichtung, um darüber die Position eines ersten Objekts gegenüber einem zweiten Objekt zu bestimmen. Die Positionsmesseinrichtung umfasst eine mit dem ersten Objekt verbundene reflektive Messteilung und eine mit dem zweiten Objekt verbundene Abtasteinheit. Mittels einer Signalverarbeitungseinheit ist der Abtastabstand zwischen Messteilung und Abtasteinheit bestimmbar.

STAND DER TECHNIK

Insbesondere bei optischen Positionsmesseinrichtungen, die im Auflicht arbeiten und eine Maßverkörperung mit einer reflektiven Messteilung aufweisen, ist es von Interesse, neben den eigentlichen Positionsinformationen zusätzlich den Abtastabstand zwischen der Messteilung und der Abtasteinheit zu erfassen. Bei modular aufgebauten Positionsmesseinrichtungen kann diese Information etwa beim Einbau in der jeweiligen Anwendung genutzt werden, um den Abtastabstand korrekt einzustellen. Im Messbetrieb ist es z.B. bei einer entsprechenden rotatorischen Variante einer derartigen Positionsmesseinrichtung möglich, aus der kontinuierlichen Überwachung des Abtastabstands Rückschlüsse auf eine Verlagerung der rotierenden Welle oder aber bezüglich thermischer Einflüsse zu gewinnen.

Zur Bestimmung des Abtastabstands in derartigen Positionsmesseinrichtungen sind bereits eine Reihe von Lösungen bekannt geworden.

So wird in der JP 2001-174287 A vorgeschlagen, das von einer zusätzlichen Lichtquelle für die Abtastabstandsmessung emittierte Licht auf eine Reflektorspur zu lenken, die zwischen zwei Messteilungsspuren auf einer Maßverkörperung angeordnet ist. Das davon reflektierte Licht trifft in der Abtasteinheit auf einen Detektor, wobei sich der Strahldurchmesser des auf dem Detektor einfallenden Strahlenbündels in Abhängigkeit vom Abtastabstand ändert. Über eine Intensitätsmessung kann der Abtastabstand abgeschätzt werden. Bei dieser Lösung sind demnach zusätzlich zu den Komponenten für die Positionsmessung eine weitere Lichtquelle, eine separate Reflektorspur sowie ein zusätzlicher Detektor nötig, um die Information bezüglich des Abtastabstands zu gewinnen.

Ohne derartige Zusatz-Komponenten kommen die Lösungen gemäß der JP 2013-113634 A bzw. der JP 2016-050886 A aus. Dort wird jeweils die Gitterstruktur der Messteilung für die Positionsmessung beleuchtet und die sich dabei entlang der Abtastabstandsrichtung periodisch ausbildenden Gitter-Selbstabbildungen gemäß dem Talbot-Effekt ausgewertet. Die Amplituden der Gitter-Selbstabbildungen stellen hier das Maß für den interessierenden Abtastabstand dar. Nachteilig an diesen Varianten ist, dass hierzu zwingend periodische Gitterstrukturen auf der Messteilung erforderlich sind, d.h. in Verbindung mit einer aperiodischen Codestruktur ist mit diesen Lösungen keine Bestimmung des Abtastabstands möglich. Außerdem werden für derartige Messverfahren Lichtquellen benötigt, die gewissen Kohärenz-Anforderungen genügen müssen.

Eine weitere Lösung ist aus der DE 10 2018 104 280 A1 bekannt, die ebenfalls die Nutzung des Detektors sowohl für die Positionsmessung als auch für die Bestimmung von Änderungen des Abtastabstands in reflektiven Positionsmesseinrichtungen vorschlägt. Als Maß für die Änderung des Abtastabstands werden hier die über den Detektor erfassten Intensitätsänderungen und/oder der Ort des von der Messteilung zurückreflektierten Lichts ausgewertet. Damit lassen sich gemäß den Angaben in dieser Druckschrift Änderungen des Abtastabstands mit einer Auflösung von ca. 0.1mm bestimmen. Für eine Überwachung der entsprechenden Positionsmesseinrichtung insbesondere im Messbetrieb ist eine derartige Auflösung bei der Bestimmung des Abtastabstands jedoch zu gering. Zudem ist die Auswertung der Lichtintensität zur Bestimmung des Abstandes nicht gut mit üblichen Verfahren zur Stabilisierung der Ausleuchtung der Messteilung kombinierbar, die vorteilhaft zum Betrieb der Positionsmesseinrichtung sind.

EP2738524A1 offenbart einen optischen Positionsgeber.

ZUSAMMENFASSUNG DER ERFINDUNG

Der vorliegenden Erfindung liegt die Aufgabe zugrunde, eine optische Positionsmesseinrichtung sowie ein Verfahren zum Betrieb einer optischen Positionsmesseinrichtung anzugeben, um eine möglichst exakte Bestimmung des Abtastabstands ohne zusätzlich erforderliche Komponenten zu ermöglichen.

Die erstgenannte Aufgabe wird erfindungsgemäß durch eine optische Positionsmesseinrichtung mit den Merkmalen des Anspruchs 1 gelöst.

Vorteilhafte Ausführungen der erfindungsgemäßen optischen Positionsmesseinrichtung ergeben sich aus den Maßnahmen, die in den abhängigen Ansprüchen aufgeführt sind.

Die zweitgenannte Aufgabe wird erfindungsgemäß durch ein Verfahren zum Betrieb einer optischen Positionsmesseinrichtung mit den Merkmalen des Anspruchs 11 gelöst.

Vorteilhafte Ausführungen des erfindungsgemäßen Verfahrens zum Betrieb einer optischen Positionsmesseinrichtung ergeben sich aus den Maßnahmen, die in den von Anspruch xx abhängigen Ansprüchen aufgeführt sind.

Die erfindungsgemäße optische Positionsmesseinrichtung dient zur Bestimmung der Position eines ersten Objekts, welches gegenüber einem zweiten Objekt entlang einer Messrichtung beweglich ist. Mit dem ersten Objekt ist eine Maßverkörperung mit einer sich entlang der Messrichtung erstreckenden, reflektiven Messteilung verbunden, die Teilungsbereiche mit unterschiedlichen Reflektivitäten aufweist. Eine Abtasteinheit ist mit dem zweiten Objekt verbunden und in einem Abtastabstand gegenüber der Maßverkörperung angeordnet. Diese umfasst mindestens eine Lichtquelle und eine Detektoranordnung mit einer Vielzahl von optoelektronischen Detektorelementen, die periodisch entlang der Messrichtung angeordnet sind. Ferner ist der Abtasteinheit eine Signalverarbeitungseinheit zugeordnet, die dazu ausgebildet und eingerichtet ist, um aus den über die Detektorelemente erzeugten Photoströmen Positionssignale bezüglich der Position des ersten Objekts gegenüber dem zweiten Objekt zu erzeugen und einen Gesamt-Photostrom in einem Detektor-Mittelbereich und in mindestens einem Detektor-Randbereich zu ermitteln und aus dem gebildeten PhotostromVerhältnis der Gesamt-Photoströme im Detektor-Mittelbereich und im Detektor-Randbereich den Abtastabstand zu bestimmen.

Mit Vorteil ist die Signalverarbeitungseinheit dazu ausgebildet und eingerichtet, um zur Bildung des Photostrom-Verhältnisses Kopien der für die Erzeugung der Positionssignale herangezogenen Photoströme zu nutzen.

Desweiteren kann die Signalverarbeitungseinheit dazu ausgebildet und eingerichtet sein, um im Messbetrieb eine Mehrzahl von Photostrom-Verhältnissen zu ermitteln, darüber eine Mittelwertbildung vorzunehmen und aus dem gemittelten Photostrom-Verhältnis den Abtastabstand zu bestimmen.

Es ist möglich, dass Signalverarbeitungseinheit dazu ausgebildet und eingerichtet ist, um den Abtastabstand

- entweder aus einer analytischen Beziehung zu ermitteln oder
- aus einer in der Signalverarbeitungseinheit abgelegten Tabelle zu ermitteln, die den Zusammenhang zwischen dem bestimmten Photostrom-Verhältnis und dem Abtastabstand beschreibt.

Vorzugsweise besteht die Messteilung aus Messteilungs-Elementarzellen, in denen das Flächenverhältnis der aufsummierten Flächen einer Kategorie von Teilungsbereichen zur Gesamt-Elementarzellenfläche konstant ist und für das Flächenverhältnis die Beziehung

$$0 < V_F = F_{HR} / F_{TB1} < 1 \text{ gilt,}$$

mit

$V_F :=$ Flächenverhältnis
$F_{TB1} :=$ aufsummierte Flächen einer Kategorie von Teilungsbereichen
$F_{GES} :=$ Gesamt-Elementarzellenfläche.

Hierbei kann die Messteilung als Inkrementalteilung ausgebildet sein, die eine eindimensionale, alternierende Anordnung von rechteckförmigen oder kreisringsektorförmigen Teilungsbereichen mit unterschiedlichen Reflektivitäten entlang der Messrichtung umfasst.

Alternativ ist möglich, dass die Messteilung eine zweidimensionale Anordnung von Teilungsbereichen mit unterschiedlichen Reflektivitäten entlang der Messrichtung und senkrecht zur Messrichtung umfasst.

Desweiteren ist auch möglich, dass die Messteilung als Pseudo Random Code ausgebildet ist und eine eindimensionale, aperiodische Anordnung von rechteckförmigen oder kreisringsektorförmigen Teilungsbereichen mit unterschiedlichen Reflektivitäten entlang der Messrichtung umfasst.

Es kann ferner vorgesehen sein, dass die Detektoranordnung

- entweder eine eindimensionale Anordnung von rechteckförmigen oder kreisringsektorförmigen Detektorelementen umfasst, die entlang der Messrichtung benachbart zueinander angeordnet sind, wobei die Längsachsen der Detektorelemente senkrecht zur Messrichtung orientiert sind, oder
- eine zweidimensionale Anordnung von Detektorelementen umfasst, die entlang der Messrichtung als auch senkrecht zur Messrichtung benachbart zueinander angeordnet sind.

Vorzugsweise sind die Lichtquelle und die Detektoranordnung in einer zur Messteilung parallelen Ebene angeordnet.

Das erfindungsgemäße Verfahren zum Betrieb einer optischen Positionsmesseinrichtung, über die die Position eines ersten Objekts gegenüber einem entlang einer Messrichtung beweglichen zweiten Objekt bestimmt wird, sieht vor, dass eine mit dem ersten Objekt verbundene Maßverkörperung mit einer sich entlang der Messrichtung erstreckenden, reflektiven Messteilung, die Teilungsbereiche mit unterschiedlichen Reflektivitäten aufweist, bereitgestellt wird. Ferner wird eine Abtasteinheit, welche mit dem zweiten Objekt verbunden und in einem Abtastabstand gegenüber der Maßverkörperung angeordnet ist, bereitgestellt, wobei die Abtasteinheit mindestens eine Lichtquelle und eine Detektoranordnung umfasst, die eine Vielzahl von optoelektronischen Detektorelementen aufweist, die periodisch entlang der Messrichtung angeordnet sind. Über eine der Abtasteinheit zugeordneten Signalverarbeitungseinheit werden aus den über die Detektorelemente erzeugten Photoströmen Positionssignale bezüglich der Position des ersten Objekts gegenüber dem zweiten Objekt erzeugt. Ferner wird ein Gesamt-Photostrom in einem Detektor-Mittelbereich und in mindestens einem Detektor-Randbereich ermittelt und aus dem gebildeten Photostrom-Verhältnis der Gesamt-Photoströme im Detektor-Mittelbereich und im Detektor-Randbereich der Abtastabstand bestimmt.

Hierbei ist möglich, dass die Signalverarbeitungseinheit zur Bildung des Photostrom-Verhältnisses Kopien der für die Erzeugung der Positionssignale herangezogenen Photoströme nutzt.

Es kann vorgesehen sein, dass die Signalverarbeitungseinheit im Messbetrieb eine Mehrzahl von Photostrom-Verhältnissen ermittelt, darüber eine Mittelwertbildung vornimmt und aus dem gemittelten PhotostromVerhältnis den Abtastabstand bestimmt.

Desweiteren kann die Signalverarbeitungseinheit den Abtastabstand

- entweder aus einer analytischen Beziehung ermitteln,
  oder
- aus einer in der Signalverarbeitungseinheit abgelegten Tabelle ermitteln, die den Zusammenhang zwischen dem bestimmten Photostrom-Verhältnis und dem Abtastabstand beschreibt.

Vorzugsweise zieht die Signalverarbeitungseinheit zur Bildung des Photostrom-Verhältnisses im Detektor-Mittelbereich doppelt so viele Detektorelemente heran wie in zwei symmetrisch zur Detektormitte liegenden Detektor-Randbereichen.

Als Vorteil der erfindungsgemäßen Lösung ist anzuführen, dass zur Bestimmung des interessierenden Abtastabstands keine zusätzlichen Komponenten erforderlich sind. Hierzu können die bereits zur Positionsmessung verwendeten Elemente wie Lichtquelle, Messteilung sowie Detektoranordnung genutzt werden. Des Weiteren gewährleistet die erfindungsgemäße Vorrichtung bzw. das erfindungsgemäße Verfahren, dass der Abtastabstand auch mit hinreichender Genauigkeit im Messbetrieb ermittelbar ist.

Die erfindungsgemäße Positionsmesseinrichtung kann zudem sowohl als Längenmessgerät wie auch als rotatorisches Messgerät z.B. in Form eines Drehgebers ausgebildet sein. Die dabei verwendete Messteilung muss hierbei auch nicht notwendigerweise periodisch ausgeführt sein.

Weitere Einzelheiten und Vorteile der vorliegenden Erfindung seien anhand der nachfolgenden Beschreibung von Ausführungsbeispielen der erfindungsgemäßen Vorrichtung und des erfindungsgemäßen Verfahrens in Verbindung mit den Figuren erläutert.

## KURZE BESCHREIBUNG DER ZEICHNUNGEN

Es zeigt

Figur 1      eine schematische Darstellung zur Erläuterung des Prinzips zur Bestimmung des Abtastabstands;

Figur 2      eine Darstellung des Zusammenhangs zwischen dem gebildeten Photostromverhältnis und dem Abtastabstand;

Figur 3      eine stark schematisierte Darstellung eines Ausführungsbeispiels einer erfindungsgemäßen optischen Positionsmesseinrichtung in einer Schnittansicht;

Figur 4a - 4c      jeweils eine Teilansicht einer geeigneten Messteilung für eine erfindungsgemäße optische Positionsmesseinrichtung, die als Längenmessgerät ausgebildet ist;

Figur 5a - 5c      jeweils eine Teilansicht einer geeigneten Messteilung für eine erfindungsgemäße optische Positionsmesseinrichtung, die als rotatorisches Messgerät in Form eines Drehgebers ausgebildet ist;

Figur 6a, 6b      jeweils eine Teilansicht einer geeigneten Detektoranordnung für eine erfindungsgemäße optische Positionsmesseinrichtung, die als Längenmessgerät ausgebildet ist;

Figur 7a, 7b     jeweils eine Teilansicht einer Detektoranordnung für eine erfindungsgemäße optische Positionsmesseinrichtung, die als rotatorisches Messgerät in Form eines Drehgebers ausgebildet ist;

Figur 8     eine Darstellung zur Erläuterung des erfindungsgemäßen Verfahrens.

## BESCHREIBUNG DER AUSFÜHRUNGSFORMEN

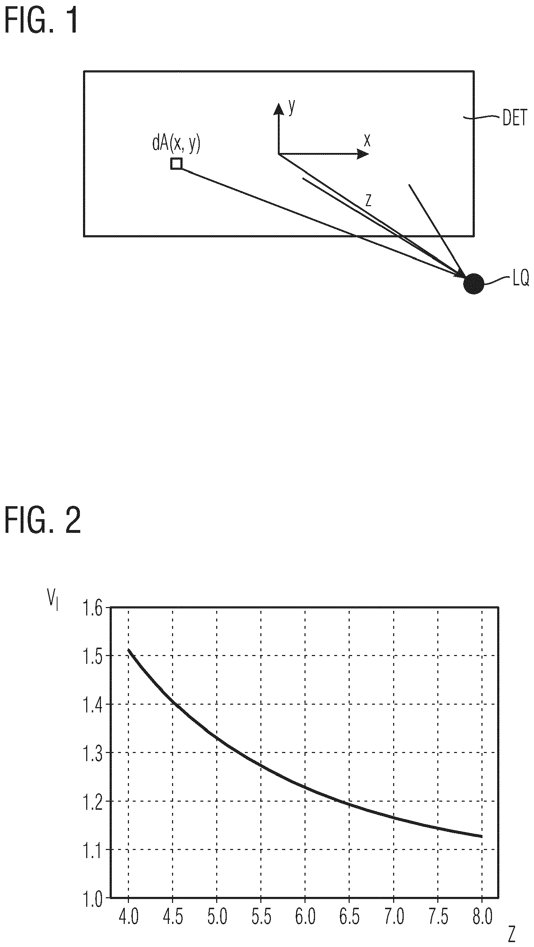

Bevor im Anschluss mehrere Ausführungsbeispiele der erfindungsgemäßen optischen Positionsmesseinrichtung im Detail erläutert werden, sei anhand der Figuren 1 und 2 zunächst das Grundprinzip erläutert, auf dem die Bestimmung des Abtastabstands in diesen Vorrichtungen jeweils basiert. Dieses besteht im Wesentlichen darin, die abstandsabhängige Änderung der inhomogenen Ausleuchtung eines optoelektronischen Detektors DET durch eine divergente Lichtquelle LQ auf den zu bestimmenden Abstand Z zurückzurechnen. Die Ausleuchtung einer kleinen Detektor-Teilfläche dA(x, y) hängt dabei zum einen vom Raumwinkel ab, unter dem die Detektor-Teilfläche dA(x, y) von der Lichtquelle LQ aus gesehen wird; zum Anderen ist die Ausleuchtung abhängig von der Abstrahlcharakteristik der Lichtquelle LQ. Für den in Figur 1 dargestellten Fall einer als LED ausgebildeten Lichtquelle LQ mit der Abstrahlcharakteristik eines Lambertstrahlers, die am Ort x = 0, y = 0, z = 0 angeordnet ist, ergibt sich beispielsweise eine Ausleuchtungsintensität dI gemäß folgender Beziehung:

$$dI \sim \frac{z^2}{(x^2 + y^2 + Z^2)^2} \qquad \text{(Gl. 1)}$$

mit:

dI := Ausleuchtungsintensität
x, y := Koordinaten einer Detektor-Teilfläche entlang der orthogonalen Koordinatenrichtungen x, y
Z := Abstand der Lichtquelle vom Detektor

Ein realer optoelektronischer Detektor DET generiert dabei einen Photostrom, der proportional zum Integral von dI über die konkret ausgeleuchtete Detektorfläche ist. Aus der obigen Beziehung ergibt sich, dass bei gleicher Detektorfläche der erzeugte Photostrom für eine Detektorfläche im Detektor-Mittelbereich bzw. Detektor-Zentrum, also bei kleinen Beträgen der x-, y-Koordinaten, größer ist als für eine Fläche im Detektor-Randbereich bei großen Beträgen der x-, y-Koordinaten. Die Lichtintensität ist in der Mitte des Detektors DET somit höher als in den Randbereichen.

Wählt man zur Photostrom-Messung feste Detektorflächen im Detektor-Mittelbereich und im Detektor-Randbereich, so hängt das Verhältnis $V_I$ der Photoströme dieser Detektorflächen nur noch vom Abstand Z zwischen der Lichtquelle LQ und dem Detektor DET ab. Einflussfaktoren wie z.B. die absolute Helligkeit der Lichtquelle LQ fallen durch die Verhältnisbildung heraus.

Der Zusammenhang zwischen einem Photostrom-Verhältnis von Photoströmen in einem Detektor-Mittelbereich und in einem Detektor-Randbereich und dem Abstand Z zwischen Lichtquelle und Detektor ist in Figur 2 für eine beispielhafte Anordnung von Lichtquelle und Detektor dargestellt. Entlang der Ordinate ist dabei das Verhältnis $V_I$ des Photostroms im Detektor-Mittelbereich zum Photostrom im Detektor-Randbereich aufgetragen, entlang der Abszisse ist der Abstand Z zwischen Detektor und Lichtquelle entlang der z-Richtung aufgetragen, angegeben in mm. Wie aus dieser Figur ersichtlich, liegt bei einem größeren Wert des Photostrom-Verhältnisses $V_I$, also bei größeren Intensitätsunterschieden zwischen Detektor-Mittelbereich und Detektor-Randbereich, ein kleinerer Abstand Z vor; bei geringen Intensitätsunterschieden zwischen Detektor-Mittelbereich und Detektor-Randbereich, also einem kleineren Wert von $V_I$ demgegenüber ein größerer Abstand Z. Je kleiner hingegen der Abstand Z, desto größer ist der Intensitätsunterschied zwischen Detektor-Mittelbereich und Detektor-Randbereich. Über den Intensitätsunterschied zwischen Detektor-Mittelbereich und Detektor-Randbereich lässt sich somit der interessierende Abstand Z zwischen Lichtquelle und Detektor bestimmen.

Bei definiert vorgegebenen Detektorflächen und einer bekannten Abstrahlcharakteristik der Lichtquelle (wie die oben angenommene Lambert-Abstrahlcharakteristik) lassen sich analytische Beziehungen für das Photostrom-Verhältnis $V_I$ als Funktion des Abstands Z herleiten, die durch analytische oder numerische Methoden nach Z aufgelöst werden können.

So lässt sich für das in Figur 1 dargestellte Beispiel, innerhalb einer Detektionsfläche $A_i$ mit den mittleren Koordinaten $x_i$, $y_i$ die detektierte Intensität $I_i$ am Detektor DET näherungsweise folgendermaßen angeben:

$$I_i = \frac{A_i\,Z^2}{(x_i^2 + y_i^2 + Z^2)^2} \qquad \text{(Gl. 2)}$$

mit:

$I_i$ := detektierte Intensität am Detektor
$A_i$ := Detektionsfläche
$x_i, y_i$ := Koordinaten der Detektionsfläche
$Z$ := Abstand der Lichtquelle vom Detektor

Für ein gemessenes Photostrom-Verhältnis $V_I = \frac{I_1}{I_2} > 1$ von detektierten Intensitäten $I_1$, $I_2$ aufgrund von zwei gleich großen Detektionsflächen in der Detektormitte und am Detektorrand ergibt sich dann der gesuchte Abstand Z gemäß folgender Beziehung:

$$Z = \frac{1}{2}\sqrt{\frac{(x_2^2 + y_2^2) - \sqrt{V_I}(x_1^2 + y_1^2)}{\sqrt{V_I} - 1}} \qquad \text{(Gl. 3)}$$

mit:

$V_I$ := gemessenes Photostrom-Verhältnis
$x_1, y_1, x_2, y_2$ := Koordinaten der Detektionsflächen
$Z$ := Abstand der Lichtquelle vom Detektor

Alternativ zu einem derartigen Vorgehen kann auch eine über eine Kalibration ermittelte Tabelle hinterlegt werden, die den funktionalen Zusammenhang zwischen dem Abstand Z und dem Photostrom-Verhältnis $V_I$ beschreibt. Eine derartige Kalibration erfolgt vor dem eigentlichen Messbetrieb der Positionsmesseinrichtung. Während des Messbetriebs kann in der hinterlegten Tabelle der Abstand Z zu einem gemessenen PhotostromVerhältnis $V_I$ ermittelt werden. Hierbei kann dann z.B. nach einem nearestneighbour-Ansatz der dem nächstliegenden Eintrag für das Verhältnis $V_I$ entsprechende Abstand Z ausgelesen werden oder auch eine Interpolation zwischen den nächstliegenden Einträgen vorgenommen werden.

Über beide Vorgehensweisen kann somit aus der Messung des Photostrom-Verhältnisses $V_I$ der gesuchte Abstand Z bestimmt werden. Dies wird in der erfindungsgemäßen optischen Positionsmesseinrichtung zur Bestimmung des Abtastabstands ausgenutzt.

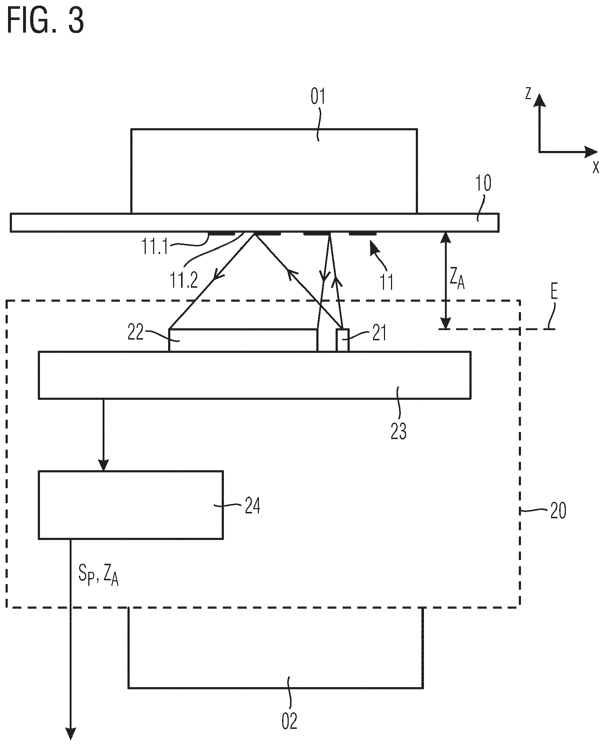

In Figur 3 ist ein Ausführungsbeispiel einer erfindungsgemäßen optischen Positionsmesseinrichtung in einer Schnittansicht stark schematisiert dargestellt. Die entsprechende Positionsmesseinrichtung ist hier als Längenmesseinrichtung ausgebildet und dient zur Bestimmung der Position eines ersten Objekts O1 gegenüber einem zweiten Objekt O2; das erste und zweite Objekt O1, 02 sind entlang der linearen Messrichtung x zueinander beweglich angeordnet. Bei den Objekten O1, O2 kann es sich etwa um zueinander entlang der Messrichtung x bewegliche Maschinenkomponenten handeln, die von einer - nicht dargestellten - Maschinensteuerung über die von der Positionsmesseinrichtung erzeugten Positionssignale $S_P$ definiert positioniert werden.

Mit dem ersten Objekt O1 ist eine Maßverkörperung 10 der Positionsmesseinrichtung verbunden. Die Maßverkörperung 10 weist eine sich entlang der Messrichtung x erstreckende, reflektive Messteilung 11 auf, die aus Teilungsbereichen 11.1, 11.2 mit unterschiedlichen Reflektivitäten besteht, die entlang der Messrichtung x alternierend angeordnet sind. In Bezug auf die Messteilung 11 gibt es unterschiedlichste Ausführungsformen sowohl in Bezug auf die Messteilungs-Struktur als auch in Bezug auf den Messteilungs-Aufbau. So kann die Messteilung 11 etwa als Inkrementalteilung oder als absolute Messteilung in Form eines Pseudo Random Codes ausgebildet sein. Im Hinblick auf den Messteilungs-Aufbau ist es möglich, die Messteilung 11 sowohl als Amplitudengitter oder aber als Phasengitter auszuführen. Im Fall eines Amplitudengitters können die Teilungsbereiche 11.1, 11.2 z.B. hoch-reflektierend und geringreflektierend (oder nicht-reflektierend) ausgebildet werden. Wird die Messteilung 11 als Phasengitter ausgeführt, so resultieren in den unterschiedlichen Teilungsbereichen 11.1, 11.2 unterschiedliche phasenschiebende Wirkungen auf die reflektierten Strahlenbündel, d.h. die unterschiedlichen Teilungsbereiche besitzen dann unterschiedliche Phasenhübe $\Delta1$, $\Delta2$. Zu weiteren Details der verwendeten Messteilung 11 sei auf die nachfolgende Beschreibung verwiesen.

Mit dem zweiten Objekt O2 ist eine Abtasteinheit 20 verbunden, der weitere Komponenten der erfindungsgemäßen Positionsmesseinrichtung zugeordnet sind. Hierzu gehören mindestens eine Lichtquelle 21 sowie eine Detektoranordnung 22; die Lichtquelle 21 und die Detektoranordnung 22 sind im dargestellten Beispiel auf einem gemeinsamen Träger 23 in der Abtasteinheit 20 angeordnet. Wie aus Figur 3 ersichtlich, sind die Lichtquelle 21 und die Detektoranordnung 22 dabei in der Abtasteinheit 20 gemeinsam in einer zur Messteilung 11 parallelen Ebene E angeordnet; hierunter sei genau genommen verstanden, dass gemäß der Figur die Detektionsebene der Detektoranordnung 22 sowie die Emissionsebene der Lichtquelle 21 in der gleichen Ebene E angeordnet sind. Die Lichtquelle 21 und die Detektoranordnung besitzen damit den gleichen Abstand zur Messteilung 11, wobei der Abstand zwischen der Ebene E und der Messteilung hier als Abtastabstand $Z_A$ definiert sei.

Als Lichtquelle 21 ist in diesem Ausführungsbeispiel eine LED (Light Emitting Diode) in der Abtasteinheit 20 vorgesehen, die Strahlung mit einer Wellenlänge von ca. 850nm emittiert. Der Lichtquelle 21 ist keine Kollimationsoptik vorgeordnet, d.h. die Messteilung 11 wird von der Lichtquelle 21 divergent beleuchtet.

Die Detektoranordnung 22 umfasst eine Vielzahl von optoelektronischen Detektorelementen wie z.B. Photodioden, die mindestens periodisch entlang der Messrichtung x angeordnet sind. Über die Detektorelemente werden aus der Abtastung eines aus der Abbildung der Messteilung 11 resultierenden Musters in der Detektionsebene bei der Relativbewegung von Maßverkörperung 10 und Abtasteinheit 20 modulierte Photoströme $I_i$ erzeugt, die dann unter anderem zur Erzeugung von Positionssignalen $S_P$ bezüglich der Position des ersten Objekts O1 gegenüber dem zweiten Objekt O2 dienen.

Des Weiteren ist der Abtasteinheit 20 eine Signalverarbeitungseinheit 24 zugeordnet, die eine Reihe von noch im Detail zu erläuternden Funktionen übernimmt, darunter die Erzeugung der Positionssignale $S_P$ aus den Photoströmen $I_i$ der Detektorelemente wie auch die Bestimmung des interessierenden Abtastabstands $Z_A$. Im dargestellten Beispiel ist die Signalverarbeitungseinheit 24 in der Abtasteinheit 20 angeordnet; dies ist jedoch nicht erfindungswesentlich, d.h. die Signalverarbeitungseinheit 24 könnte z.B. auch in einer der Positionsmesseinrichtung nachgeordneten Maschinensteuerung integriert sein.

Die erfindungsgemäße optische Positionsmesseinrichtung ist als Auflicht-System ausgebildet. Hierbei treffen die von der Lichtquelle 21 divergierend emittierten Strahlenbündel auf die reflektive Messteilung 11 und werden von dort in Richtung der Detektoranordnung 22 zurückreflektiert, wie dies in Figur 3 angedeutet ist. Die Detektoranordnung 22 wird im Unterschied zur in Figur 1 dargestellten Anordnung von Lichtquelle LQ und Detektor DET somit nicht direkt beleuchtet, vielmehr wird das Licht über die Strukturen der Messteilung 11 auf die Detektoranordnung 22 zurückreflektiert. Bei einer derartigen Abtastung resultiert aus der divergenten Beleuchtung der Messteilung 11 und der damit verbundenen Projektionswirkung eine vergrößerte Abbildung der Strukturen der Messteilung 11 auf der Detektoranordnung 22. Da in der erfindungsgemäßen Positionsmesseinrichtung die Lichtquelle 21 und der Detektor 22 gemeinsam in einer zur Messteilung 11 parallelen Ebene E in der Abtasteinheit 20 angeordnet sind und damit den gleichen Abtastabstand $Z_A$ zur Messteilung 11 besitzen, resultiert eine Abbildung der Maßstabstrukturen unabhängig vom Abtastabstand $Z_A$ in die Detektionsebene mit einem Vergrößerungsfaktor 2. Es sei an dieser Stelle zudem darauf hingewiesen, dass aufgrund der Rückreflexion des Lichts über die Messteilung 11 auf die Detektoranordnung 22 aus dem bestimmten Photostrom-Verhältnis zwischen Detektor-Mittelbereich und mindestens einem Detektor-Randbereich im Unterschied zu Figur 1 und 2 zunächst der doppelte Abtastabstand $Z_A$ bestimmt wird.

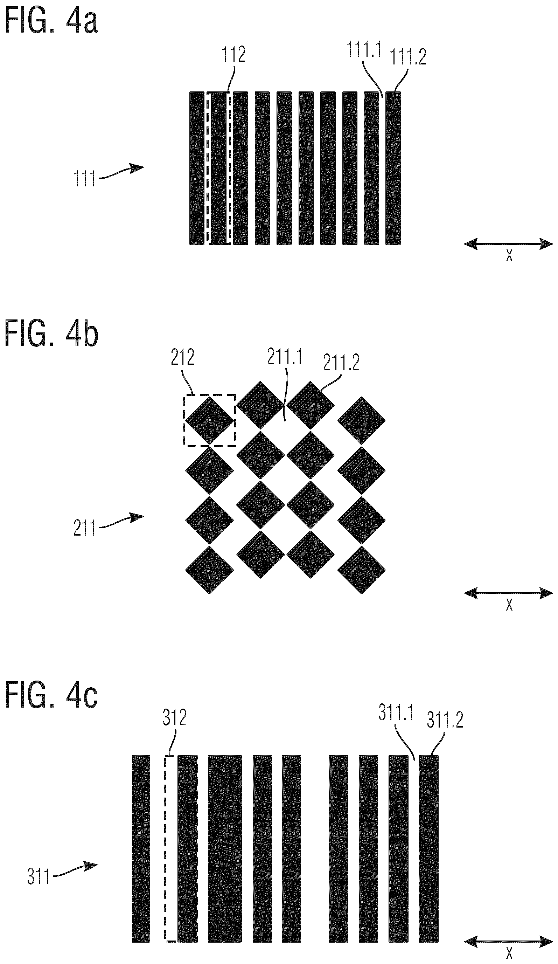

Um in der erfindungsgemäßen optischen Positionsmesseinrichtung das anhand der Figuren 1 und 2 erläuterte Grundprinzip zur Bestimmung des Abtastabstands $Z_A$ aus dem Photostrom-Verhältnis $V_I$ zwischen Detektor-Zentrum und mindestens einem Detektor-Randbereich umzusetzen, ist es vorteilhaft, wenn auf Seiten der verwendeten Messteilung 11 und/oder der eingesetzten Detektoranordnung 22 bestimmte Voraussetzungen erfüllt sind bzw. bestimmte Maßnahmen ergriffen werden. Dies wird im Folgenden anhand der Figuren 4a - 7b näher erläutert.

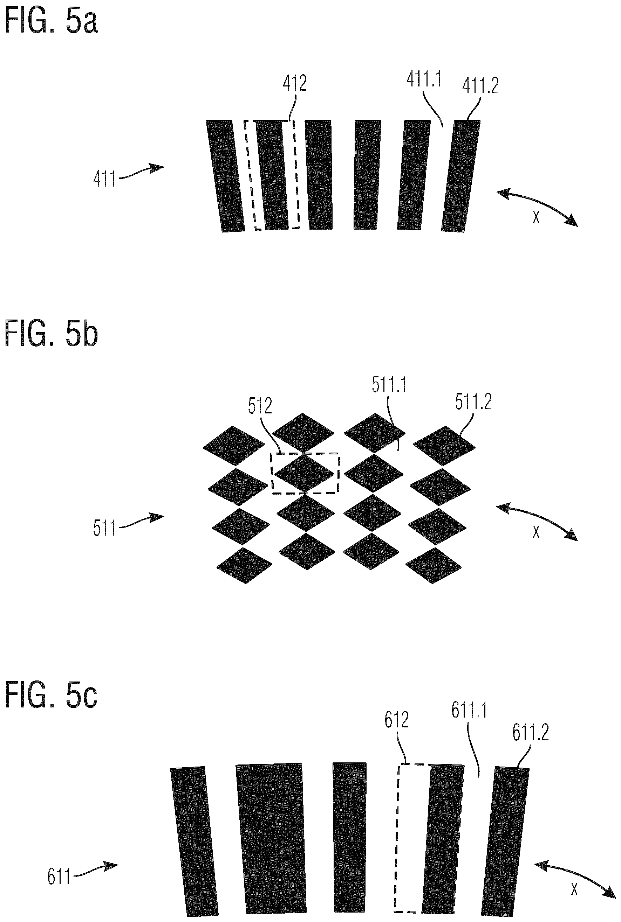

Zunächst sei hierzu auf die verwendete Messteilung in der erfindungsgemäßen optischen Positionsmesseinrichtung eingegangen. Die Figuren 4a - 4c zeigen Teilansichten möglicher Ausführungsformen von Messteilungen 111, 211, 311 für Positionsmesseinrichtungen, die als Längenmessgerät ausgebildet sind; in den Figuren 5a - 5c sind Teilansichten von Messteilungen 411, 511, 611 dargestellt, die in erfindungsgemäßen rotatorischen Positionsmesseinrichtungen eingesetzt werden können, also z.B. in Drehgebern.

Die verschiedenen Messteilungen sind dabei jeweils als Amplitudengitter ausgeführt, wobei höher-reflektierende Teilungsbereiche durchgängig dunkel dargestellt sind, geringer-reflektierende Teilungsbereiche dagegen hell. Wie bereits oben erwähnt, wäre grundsätzlich auch möglich, die Messteilungen als Phasengitter auszuführen. In diesem Fall würden die hellen und dunklen Teilungsbereiche dann Teilungsbereiche mit unterschiedlichen phasenschiebenden Wirkungen repräsentieren.

Die Figuren 4a und 5a zeigen Messteilungen 111 bzw. 411, die jeweils als Inkrementalteilung ausgebildet sind und eine eindimensionale, alternierende Anordnung von rechteckförmigen bzw. kreisringsektorförmigen Teilungsbereichen 111.1, 111.2 bzw. 411.1, 411.2 mit unterschiedlichen Reflektivitäten entlang der Messrichtung x umfassen. Im Fall der in Figur 4a gezeigten Messteilung 111 für ein Längenmessgerät erstreckt sich die Messrichtung x linear entlang derjenigen Richtung, entlang der Messteilung 111 und Abtasteinheit zueinander verschiebbar sind. Bei der in Figur 5a gezeigten Messteilung 411 eines Drehgebers erstreckt sich die Messrichtung x wie ersichtlich kreisringförmig um eine - nicht dargestellte - Rotationsachse, um die Messteilung 411 und Abtasteinheit zueinander verdrehbar sind.

Die Figuren 4b und 5b zeigen weitere für Längenmessgeräte und Drehgeber geeignete Messteilungen 211 bzw. 511. Vorgesehen ist hier jeweils eine zweidimensionale Anordnung von Teilungsbereichen 211.1, 211.2 bzw. 511.1, 511.2 mit unterschiedlichen Reflektivitäten entlang der Messrichtung x und senkrecht zur Messrichtung x. Die Teilungsbereiche 211.1, 211.2 bzw.

511.1, 511.2 dieser Messteilungen 211, 511 sind dabei annähernd rautenförmig ausgebildet. In der Praxis sind die entsprechenden Konturen der Teilungsbereiche 211.1, 211.2 nicht exakt linear ausgebildet, sondern sind cosinusförmig-gekrümmt, worüber eine Reduzierung von unerwünschten Oberwellen in den erzeugten Positionssignalen erreicht wird. In Bezug auf derartige Messteilungen 211, 511 und die Abtastung derselbigen sei ergänzend auf die Druckschrift EP 3 511 680 A1 verwiesen.

In den Figuren 4c und 5c sind schließlich Messteilungen 311 bzw. 611 für Längenmessgeräte und Drehgeber gezeigt, die als Pseudo Random Codes ausgebildet sind und jeweils eine eindimensionale, aperiodische Anordnung von rechteckförmigen bzw. kreisringsektorförmigen Teilungsbereichen 311.1, 311.2 bzw. 611.1, 611.2 mit unterschiedlichen Reflektivitäten entlang der Messrichtung x umfassen.

Grundsätzlich stören die in der abgetasteten Messteilung enthaltenen Strukturen, die zur Positionsbestimmung erforderlich sind, die Bestimmung des Abtastabstands $Z_A$ gemäß dem oben erläuterten Prinzip. Ursache hierfür ist, dass im Fall einer Relativbewegung von Messteilung und Abtasteinheit das zu bildende Photostromverhältnis $V_I$ ebenfalls beeinflusst wird, d.h. das Photostromverhältnis $V_I$ ist nicht ausschließlich vom Abtastabstand $Z_A$ abhängig. Durch eine geeignete Ausbildung der Messteilung lassen sich die Störeinflüsse auf die Abtastabstands-Bestimmung jedoch deutlich verringern. So ist vorgesehen, dass in den Messteilungs-Elementarzellen, aus denen sich die jeweilige Messteilung lückenlos zusammensetzen lässt, im Fall einer als Amplitudengitter ausgebildeten Messteilung, das Flächenverhältnis $V_F$ der aufsummierten Flächen $F_{TB1}$ hoch-reflektierender Teilungsbereiche zur Gesamt-Elementarzellenfläche $F_{GES}$ konstant ist. In den Figuren 4a - 4c und 5a - 5c ist eine repräsentative Messteilungs-Elementarzelle 112, 212, 312, 412, 512, 612 der jeweiligen Messteilung 111, 211, 311, 411, 511, 611, auf die diese Bedingung zutrifft, jeweils strichliniert eingezeichnet.

Analog hierzu würde im Fall einer als Phasengitter ausgebildeten Messteilung z.B. das Flächenverhältnis der aufsummierten Flächen $F_{TB1}$ von Teilungsbereichen mit dem Phasenhub $\Delta 1$ zur Gesamt-Elementarzellenfläche $F_{GES}$ als konstant gewählt etc..

Vorzugsweise wird also das Flächenverhältnis $V_F$ gemäß $0 < V_F = F_{TB1} / F_{GES} < 1$ gewählt, mit $V_F :=$ Flächenverhältnis, $F_{TB1} :=$ aufsummierte Flächen einer Kategorie von Teilungsbereichen und $F_{GES} :=$ Gesamt-Elementarzellenfläche. In einer bevorzugten Ausführungsform ist $V_F \approx 0.5$ vorgesehen.

Jede Messteilungs-Elementarzelle 112, 212, 312, 412, 512, 612 spannt von der Lichtquelle aus betrachtet nur einen kleinen Raumwinkel auf. Unter derunter diesem Umständen für als LED ausgebildeten Lichtquellen gut erfüllten - Näherung, dass die Abstrahlcharakteristik der Lichtquelle über diesen Raumwinkel konstant ist, entspricht die reflektierte Gesamtlichtmenge aufgrund einer beliebig strukturierten Messteilungs-Elementarzelle 112, 212, 312, 412, 512, 612 dann der Lichtmenge, die dieselbe Messteilungs-Elementarzelle 112, 212, 312, 412, 512, 612 ohne Strukturierung mit einer mittleren konstanten Reflektivität reflektieren würde. Vorausgesetzt, über die Detektoranordnung wird das gesamte Licht einer Messteilungs-Elementarzelle 112, 212, 312, 412, 512, 612 erfasst, so mittelt sich der zunächst störende Einfluss der Strukturierung innerhalb einer Messteilungs-Elementarzelle 112, 212, 312, 412, 512, 612 heraus und die jeweilige Messteilung 111, 211, 311, 411, 511, 611 wirkt wie ein Spiegel mit verminderter, aber konstanter Reflektivität. Damit kann das oben erläuterte Grundprinzip trotz der in den Messteilungen 111, 211, 311, 411, 511, 611 enthaltenen Strukturen genutzt werden, um den Abtastabstand $Z_A$ aus dem Photostrom-Verhältnis $V_I$ zwischen einem Detektor-Mittelbereich und mindestens einem Detektor-Randbereich zu bestimmen.

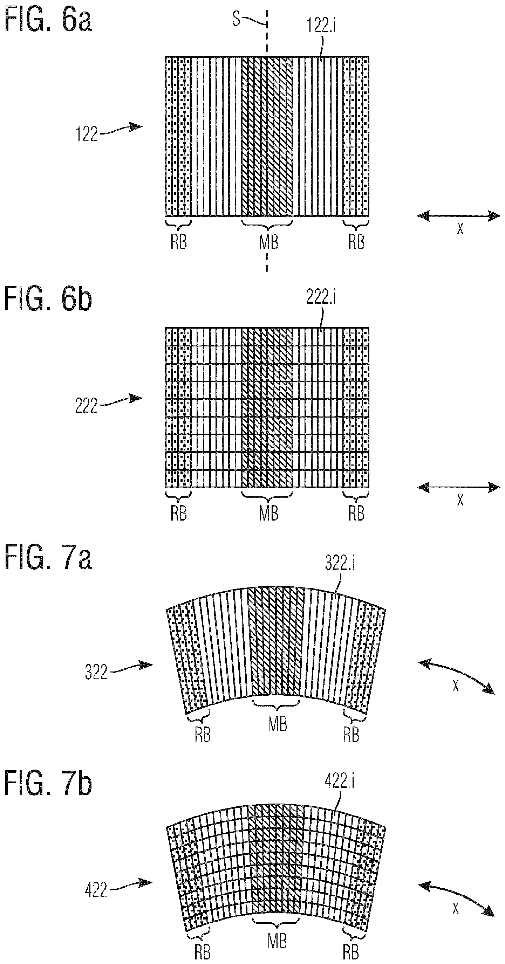

Im Nachfolgenden wird erläutert, welche Maßnahmen auf Seiten der Detektoranordnung 22 in der erfindungsgemäßen optischen Positionsmesseinrichtung vorteilhaft sind, um das oben beschriebene Prinzip zur Bestimmung des Abtastabstands $Z_A$ umzusetzen. In den Figuren 6a, 6b sind jeweils Teilansichten möglicher Ausführungsformen von Detektoranordnungen 122, 222 für Positionsmesseinrichtungen gezeigt, die als Längenmessgerät ausgebildet sind; in den Figuren 7a, 7b sind Teilansichten von Detektoranordnungen 322, 422 dargestellt, die in erfindungsgemäßen rotatorischen Positionsmesseinrichtungen wie z.B. Drehgebern eingesetzt werden können.

Die Figuren 6a und 7a zeigen Teilansichten von Detektoranordnungen 122, 322, die sowohl zur Abtastung von Inkrementalteilungen gemäß den Figuren 4a, 5a als auch zur Abtastung von Messteilungen mit Pseudo Random Codes gemäß den Figuren 4c, 5c geeignet sind. Die Detektoranordnung 122 gemäß Figur 6a kann dabei in Längenmessgeräten mit einer linearen Messrichtung x eingesetzt werden, um z. B. die Messteilung aus Figur 4a oder 4c abzutasten. Die Detektoranordnung 322 aus Figur 7a kann in Drehgebern verwendet werden, bei denen die Messrichtung x kreisringförmig um eine - nicht dargestellte - Rotationsachse verläuft; d.h. die Detektoranordnung 322 kann etwa zur Abtastung der Messteilung aus Figur 5a verwendet werden.

Die für Längenmessgeräte geeignete Detektoranordnung 122 gemäß Figur 6a umfasst eine eindimensionale Anordnung einer Mehrzahl identisch ausgebildeter, rechteckförmiger Detektorelemente 122.i, die periodisch entlang der linearen Messrichtung x benachbart zueinander angeordnet sind. Die Längsachsen der Detektorelemente 122.i sind wie aus der Figur ersichtlich jeweils senkrecht zur Messrichtung x orientiert.

Die für Drehgeber geeignete Detektoranordnung 322 gemäß Figur 7a weist eine eindimensionale Anordnung einer Mehrzahl kreisringsektorförmiger Detektorelemente 322.i, auf periodisch entlang der kreisringförmig verlaufenden Messrichtung x benachbart zueinander angeordnet sind. Die Längsachsen der Detektorelemente 322.i sind auch hier wie aus der Figur ersichtlich jeweils senkrecht zur Messrichtung x orientiert.

Zur Abtastung der Messteilungen 211, 511 gemäß den Figuren 4b, 5b können die in den Figuren 6b, 7b dargestellten Detektoranordnungen 222, 422 eingesetzt werden.

Im Fall der für Längenmessgeräte geeigneten Detektoranordnung 222 aus Figur 6b, besteht diese aus einer zweidimensionalen Anordnung einer Mehrzahl von Detektorelementen 222.i, die entlang der linearen Messrichtung x als auch senkrecht zur Messrichtung x benachbart zueinander angeordnet sind. Über die Detektoranordnung 222 kann die Messteilung aus Figur 4b abgetastet werden.

Zur Verwendung in Drehgebern ist die Detektoranordnung 422 gemäß Figur 7b geeignet. Diese besteht aus einer zweidimensionalen Anordnung einer Mehrzahl von Detektorelementen 422.i, die entlang der kreisringförmigen Messrichtung x als auch senkrecht zu dieser Messrichtung x benachbart zueinander angeordnet sind. Mit Hilfe dieser Detektoranordnung 422 kann etwa die Messteilung 511 aus Figur 5b abgetastet werden.

In den Figuren 6a, 6b, 7a, 7b ist bei den jeweiligen Detektoranordnungen 122, 222, 32, 422 jeweils dargestellt, welche der Detektorelemente 122.i genutzt werden, um die zur vorstehend erläuterten Bestimmung des Abtastabstands $Z_A$ erforderlichen Gesamt-Photoströme $I_{ges,MB}$, $I_{ges,RB}$ im Detektor-Mittelbereich MB sowie in vorliegend zwei Detektor-Randbereichen RB zu ermitteln. Die hierzu verwendeten Detektorelemente 122.i sind in diesen Figuren jeweils über eine abweichende Schraffur gegenüber den restlichen Detektorelementen 122.i kenntlich gemacht. Im Detail wird nachfolgend beispielhaft die in Figur 6a gezeigte Detektoranordnung 122 beschrieben, die für ein Längenmessgerät geeignet ist.

Es sei an dieser Stelle darauf hingewiesen, dass es nicht zwingend erforderlich ist, Gesamt-Photoströme $I_{ges,RB}$ wie hier in zwei Detektor-Randbereichen RB zu ermitteln, grundsätzlich wäre auch möglich, lediglich einen Detektor-Randbereich hierzu heranzuziehen.

Im dargestellten Beispiel der Figur 6a werden in der Detektoranordnung 122 von der Signalverarbeitungseinheit zur Bestimmung des Abtastabstands $Z_A$ im Detektor-Mittelbereich MB acht benachbarte Detektorelemente 122.i herangezogen, die spiegelsymmetrisch zur Symmetrieachse S der Detektoranordnung 122 angeordnet sind. Zur Bildung des Gesamt-Photostroms $I_{ges,MB}$ im Detektor-Mittelbereich MB werden die Photoströme $I_{i,MB}$ dieser acht Detektorelemente 122.i aufsummiert. Am linken und rechten Rand der Detektoranordnung 122 werden jeweils vier Detektorelemente 122.i in den beiden entsprechenden Randbereichen RB von der Signalverarbeitungseinheit herangezogen, deren Photoströme $I_{i,RB}$ zu einem Gesamt-Photostrom $I_{ges,RB}$ im Detektor-Randbereich aufsummiert werden. Wie aus der Figur ersichtlich, werden jeweils die vier äußersten Detektorelemente 122.i im linken und rechten Randbereich RB ausgewählt. Aus dem derart gewonnenen Gesamt-Photostrom $I_{ges,MB}$ im Detektor-Mittelbereich MB und dem Gesamt-Photostrom $I_{ges,RB}$ im Detektor-Randbereich RB wird dann von der Signalverarbeitungseinheit das Photostrom-Verhältnis $V_I = I_{ges,MB}$ / $I_{ges,RB}$ gebildet und daraus der interessierende Abtastabstand $Z_A$ bestimmt.

Wie bereits oben erwähnt kann dies z.B. dadurch erfolgen, dass der Zusammenhang zwischen dem Photostrom-Verhältnis $V_I$ und dem Abtastabstand $Z_A$ gemäß der Darstellung in Figur 2 in einer Tabelle in der Signalverarbeitungseinheit abgelegt wird.

Die Anzahl von Detektorelementen 122.i, die im Detektor-Mittelbereich MB sowie in den Detektor-Randbereichen RB der Detektoranordnung 122 zur Bestimmung der Gesamt-Photoströme $I_{ges,MB}$, $I_{ges,RB}$ herangezogen werden, wird dabei vorzugsweise in Abhängigkeit von der Abbildung bzw. Projektion der Teilungsstruktur in die Detektionsebene gewählt. So wurde die Anzahl von Detektorelementen 122.i im Detektor-Mittelbereich MB und in den Detektor-Randbereichen RB jeweils so gewählt, dass darüber ganzzahlige Vielfache (n = 1, 2, 3,..) der in die Detektionsebene projizierten Messteilungs-Elementarzellen erfasst werden. Da aufgrund der vorgesehenen Einfeld-Abtastung pro Messteilungs-Elementarzelle vier Detektorelemente 122.i zur Erzeugung von Positionssignalen $S_P$ in Form vier um 90° phasenversetzten Inkrementalsignalen vorgesehen sind, werden in den beiden Detektor-Randbereichen RB jeweils (n = 1) x 4 = 4 Detektorelemente 122.i zur Bildung des Gesamt-Photostroms $I_{ges,RB}$ herangezogen, im Detektor-Mittelbereich MB werden zur Bildung des Gesamt-Photostroms $I_{ges,MB}$ wie aus Figur 6a ersichtlich (n = 2) x 4 = 8 Detektorelemente 122.i herangezogen. Insgesamt werden demzufolge gleich viele Detektorelemente 122.i aus dem Detektor-Mittelbereich MB wie aus den beiden Detektor-Randbereichen RB zur Bildung des Photostrom-Verhältnisses $V_I = I_{ges,MB}$ / $I_{ges,RB}$ und damit zur Bestimmung des Abtastabstands $Z_A$ genutzt. In anderen Worten ausgedrückt: Im Detektor-Mittelbereich MB und in den beiden Detektor-Randbereichen RB werden in diesem Ausführungsbeispiel jeweils Photoströme aus gleich vielen abgetasteten Messteilungs-Elementarzellen zur Bestimmung von $V_I$ herangezogen. Es sei an dieser Stelle darauf hingewiesen, dass die gleiche Anzahl von herangezogenen Messteilungs-Elementarzellen im Detektor-Mittelbereich und Detektor-Randbereich im Rahmen der vorliegenden Erfindung nicht zwingend notwendig ist.

Wie aus der vorhergehenden Beschreibung ersichtlich, werden von der Signalverarbeitungseinheit demnach zur Bestimmung des Photostrom-Verhältnisses $V_I$ Kopien der Photoströme $I_{i,MB}$, $I_{i,RB}$ ausgewählter Detektorelemente 122.i genutzt, die auch für die Erzeugung der verschiebungsabhängigen Positionssignale $S_P$ vorgesehen sind. Die Erzeugung entsprechender Kopien kann z.B. auf analogem Weg mittels sog. Stromspiegel oder aber durch einen zweiten Spannungsabgriff nach einem Strom-Spannungs-Wandler erfolgen. Es ist alternativ auch möglich, die Photoströme $I_{i,MB}$, $I_{i,RB}$ zunächst zu digitalisieren und die entsprechenden Werte mehrfach zu benutzen.

Die Positionssignale $S_P$ in Form mehrerer Inkrementalsignale werden in diesem Beispiel auf bekannte Art und Weise erzeugt. So wird jede auf die Detektoranordnung 122 projizierte Messteilungs-Elementarzelle mit Hilfe von vier Detektorelementen 122.i abgetastet, woraus im Fall einer Relativbewegung von Maßverkörperung und Abtasteinheit vier um jeweils 90° phasenversetzte Inkrementalsignale resultieren. Die Photoströme von Detektorelementen 122.i, die phasengleiche Inkrementalsignale erzeugen, werden aufsummiert und von der Signalverarbeitungseinheit in bekannter Art und Weise weiterverarbeitet, um dann ausgangsseitig zwei um 90° phasenversetzte Inkrementalsignale als Positionssignale $S_P$ zur Weiterverarbeitung bereitzustellen.

Eine nochmalige Steigerung der Genauigkeit bei der Ermittlung des Abtastabstands $Z_A$ lässt sich etwa im Messbetrieb erreichen, wenn die Bestimmung des Photostrom-Verhältnisses $V_I$ über die Signalverarbeitungseinheit mehrfach erfolgt. Über die Mehrzahl bestimmter Photostrom-Verhältnisses $V_I$ wird dann eine Mittelwertbildung vorgenommen und aus dem gemittelten Photostrom-Verhältnis $\emptyset V_I$ der Abtastabstand $Z_A$ bestimmt. Auf diese Art und Weise lassen sich Ungenauigkeiten bei der Abtastabstands-Bestimmung vermeiden, die z.B. durch lokale Verschmutzungen der Messteilung verursacht werden können. Eine solche Mittelung kann z.B. über die Zeit erfolgen, indem die Berechnung der Photostrom-Verhältnisse $V_I$ periodisch durchgeführt wird und eine bestimmte Anzahl von ermittelten Photostrom-Verhältnisses $V_I$ zusammengefasst wird. Es ist auch möglich, über einen bestimmten Positionsbereich zu mitteln, indem man z.B. ermittelte Photostrom-Verhältnisse $V_I$ innerhalb vorgegebener Positionsbereiche der Positionsmesseinrichtung zusammenfasst und mittelt, und somit Durchschnittswerte für die entsprechenden Positionsbereiche ausgibt.

Völlig analog wird zur Bildung des Photostrom-Verhältnisses $V_I$ auch im Fall der Detektoranordnung 322 in Figur 7a vorgegangen, die zur Abtastung der in Figur 5a gezeigten Messteilung 411 in einem Drehgeber geeignet ist.

Ähnlich hierzu erfolgt auch bei den Detektoranordnungen 222, 422 aus den Figuren 6b und 7b, die zur Abtastung der Messteilungen aus den Figuren 4b und 5b dienen, die Auswahl von Detektorelementen 122.i im Detektor-Mittelbereich MB und in den beiden Detektor-Randbereichen RB. Wie z.B. anhand von Figur 4b erläutert, ist hier die Messteilungs-Elementarzelle 212 in etwa quadratisch. Um eine derartige, in die Detektionsebene projizierte rautenförmige Messteilungs-Elementarzelle abzutasten ist in der Detektoranordnung 222 aus Figur 6b eine Gruppe von 3 x 4 Detektorelementen 222.i erforderlich, wovon vier Detektorelemente 222.i entlang der Messrichtung x benachbart zueinander angeordnet sind und drei Detektorelemente 222.i senkrecht zur Messrichtung x. Zur Abtastung einer Messteilungs-Elementarzelle sind demzufolge pro Gruppe 12 Detektorelemente 222.i erforderlich. Im Detektor-Mittelbereich MB werden hier sechs derartige Gruppen von Detektorelementen 222.i der Detektoranordnung 222 zur Bildung des Photostrom-Verhältnisses $V_I$ herangezogen, in den beiden Randbereichen RB jeweils drei derartige Gruppen von Detektorelementen 222.i.

Analog hierzu wird im Fall der Detektoranordnung 422 in Figur 7b vorgegangen, die in einem Drehgeber zur Abtastung einer Messteilung gemäß Figur 5b eingesetzt werden kann.

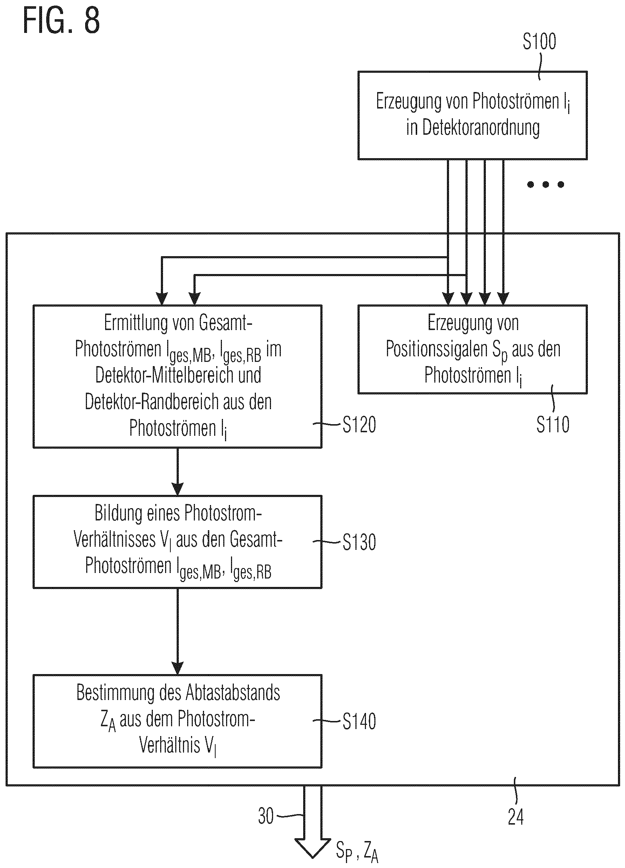

Abschließend wird anhand von Figur 8 nachfolgend das erfindungsgemäße Vorgehen zur Bestimmung des Abtastabstands $Z_A$ noch einmal zusammenhängend erläutert. Die Figur zeigt hierbei im Wesentlichen eine stark schematisierte Darstellung der Signalverarbeitungseinheit 24 der erfindungsgemäßen optischen Positionsmesseinrichtung mit deren maßgeblichen Funktionsblöcken.

Über die Detektoranordnung der erfindungsgemäßen Positionsmesseinrichtung werden gemäß dem Funktionsblock S100 Photoströme $I_i$ aus dem von der Messteilung in die Detektionsebene projizierten Lichtmuster erzeugt und an die Signalverarbeitungseinheit 24 übergeben.

Die Photoströme $I_i$ werden von der Signalverarbeitungseinheit 24 zum einen genutzt, um daraus Positionssignale $S_P$ bezüglich der Bewegung von Maßverkörperung und Abtasteinheit zu erzeugen (Funktionsblock S110). Beispielsweise kann es sich bei den erzeugten Positionssignalen $S_P$ um zwei sinusförmige Inkrementalsignalen handeln, die einen Phasenversatz von 90° zueinander aufweisen; alternativ hierzu könnten aber auch Positionssignale $S_P$ in Form von Absolut-Positionsdaten erzeugt werden. Die entsprechenden Positionssignale $S_P$ werden über eine geeignete Schnittstelle 30 einer - nicht dargestellten - Folgeelektronik zur Weiterverarbeitung übergeben werden.

Eine Teil der von der Detektoranordnung bereitgestellten Photoströme $I_i$ wird kopiert und zur Ermittlung von Gesamt-Photoströmen $I_{ges,MB}$, $I_{ges,RB}$ aus einem Detektor-Mittelbereich und Detektor-Randbereichen herangezogen, indem Photoströme ausgewählter Detektorelemente hierzu aufsummiert werden (Funktionsblock S120).

Aus den Gesamt-Photoströmen $I_{ges,MB}$, $I_{ges,RB}$ wird anschließend ein Photostrom-Verhältnis $V_I$ gemäß $V_I$ = $I_{ges,MB}$ / $I_{ges,RB}$ gebildet (Funktionsblock S130).

Aus dem Photostrom-Verhältnis $V_I$ wird dann der Abtastabstand $Z_A$ wie vorstehend erläutert bestimmt (Funktionsblock S140). Hierzu kann entweder eine analytische Beziehung herangezogen werden, die den Zusammenhang zwischen $V_I$ und $Z_A$ beschreibt; alternativ erfolgt die Bestimmung des Abtastabstands $Z_A$ aus einer in der Signalverarbeitungseinheit 24 abgelegten Tabelle, die für eine Mehrzahl von Photostrom-Verhältnissen $V_I$ den zugehörigen Abtastabstand $Z_A$ angibt.

Über die Schnittstelle 30 kann der derart ermittelte Abtastabstand $Z_A$ dann ebenfalls an eine Folgeelektronik zur Weiterverarbeitung ausgegeben werden.

Neben den erläuterten Ausführungsbeispielen existieren im Rahmen der vorliegenden Erfindung selbstverständlich noch weitere Ausgestaltungsmöglichkeiten.

So ist es möglich, alternativ oder ergänzend den ermittelten Abtastabstand $Z_A$ über eine Anzeigeeinheit zu visualisieren, um dadurch etwa bei der Montage der Positionsmesseinrichtung eine Hilfe für den korrekten Anbau bereitzustellen.

Ferner kann vorgesehen werden, den bestimmten Abtastabstand $Z_A$ über ein geeignetes Verfahren zu bewerten und das Ergebnis einer solchen Bewertung z.B. in Form einer Bewertungsgröße an eine Folgeelektronik auszugeben und/oder über eine Anzeigeeinheit zu visualisieren.

**Patentansprüche**

1.  Optische Positionsmesseinrichtung zur Bestimmung der Position eines ersten Objekts (O1), welches gegenüber einem zweiten Objekt (O2) entlang einer Messrichtung (x) beweglich ist, mit

    - einer mit dem ersten Objekt (O1) verbundenen Maßverkörperung (10) mit einer sich entlang der Messrichtung (x) erstreckenden, reflektiven Messteilung (11; 111; 211; 311; 411; 511; 611), die Teilungsbereiche (11.1, 11.2; 111.1, 111.2; 211.1, 211.2; 311.1, 311.2; 411.1, 411.2; 511.1, 511.2; 611.1, 611.2) mit unterschiedlichen Reflektivitäten aufweist, und
    - einer Abtasteinheit (20, welche mit dem zweiten Objekt (O2) verbunden und in einem Abtastabstand ($Z_A$) gegenüber der Maßverkörperung (10) angeordnet ist, mit

        - mindestens einer Lichtquelle (21), und
        - einer Detektoranordnung (22; 122; 222; 322; 422), die eine Vielzahl von optoelektronischen Detektorelementen (122.i; 222.i; 322.i; 422.i) umfasst, die periodisch entlang der Messrichtung (x) angeordnet sind, sowie

        - einer der Abtasteinheit (20) zugeordneten Signalverarbeitungseinheit (24), die dazu ausgebildet und eingerichtet ist, um

        - aus den über die Detektorelemente (122.i; 222.i; 322.i; 422.i) erzeugten Photoströmen ($I_i$) Positionssignale ($S_P$) bezüglich der Position des ersten Objekts (O1) gegenüber dem zweiten Objekt (O2) zu erzeugen und
        - einen Gesamt-Photostrom ($I_{ges,MB}$, $I_{ges,RB}$) in einem Detektor-Mittelbereich (MB) und in mindestens einem Detektor-Randbereich (RB) zu ermitteln und aus dem gebildeten Photostrom-Verhältnis ($V_I$) der Gesamt-Photoströme ($I_{ges,MB}$, $I_{ges,RB}$) im Detektor-Mittelbereich (MB) und im Detektor-Randbereich (RB) den Abtastabstand ($Z_A$) zu bestimmen.

2.  Optische Positionsmesseinrichtung nach Anspruch 1, wobei die Signalverarbeitungseinheit (24) dazu ausgebildet und eingerichtet ist, um zur Bildung des Photostrom-Verhältnisses ($V_I$) Kopien der für die Erzeugung der Positionssignale ($S_P$) herangezogenen Photoströme ($I_i$) zu nutzen.

3.  Optische Positionsmesseinrichtung nach Anspruch 1 oder 2, wobei die Signalverarbeitungseinheit (24) dazu ausgebildet und eingerichtet ist, um im Messbetrieb eine Mehrzahl von Photostrom-Verhältnissen ($V_I$) zu ermitteln, darüber eine Mittelwertbildung vorzunehmen und aus dem gemittelten Photostrom-Verhältnis ($\emptyset V_I$) den Abtastabstand ($Z_A$) zu bestimmen.

4.  Optische Positionsmesseinrichtung nach mindestens einem der Ansprüche 1 - 3, wobei die Signalverarbeitungseinheit (24) dazu ausgebildet und eingerichtet ist, um den Abtastabstand ($Z_A$)

    - entweder aus einer analytischen Beziehung zu ermitteln
    oder
    - aus einer in der Signalverarbeitungseinheit (24) abgelegten Tabelle zu ermitteln, die den Zusammenhang zwischen dem bestimmten Photostrom-Verhältnis ($V_I$) und dem Abtastabstand ($Z_A$) beschreibt.

5.  Optische Positionsmesseinrichtung nach mindestens einem der Ansprüche 1 - 4, wobei die Messteilung (11; 111; 211; 311; 411; 511; 611) aus Messteilungs-Elementarzellen (112; 212; 312; 412; 512; 612) besteht, in denen das Flächenverhältnis ($V_F$) der aufsummierten Flächen ($F_{TB1}$) einer Kategorie von Teilungsbereichen zur Gesamt-Elementarzellenfläche ($F_{GES}$) konstant ist und für das Flächenverhältnis ($V_F$) die Beziehung

$$0 < V_F = F_{HR} / F_{TB1} < 1 \text{ gilt,}$$

mit

$V_F$ := Flächenverhältnis
$F_{TB1}$ := aufsummierte Flächen einer Kategorie von Teilungsbereichen
$F_{GES}$ := Gesamt-Elementarzellenfläche

6. Optische Positionsmesseinrichtung nach Anspruch 5, wobei die Messteilung (11; 111; 411) als Inkrementalteilung ausgebildet ist, die eine eindimensionale, alternierende Anordnung von rechteckförmigen oder kreisringsektorförmigen Teilungsbereichen (11.1, 11.2; 111.1, 111.2; 411.1, 411.2) mit unterschiedlichen Reflektivitäten entlang der Messrichtung (x) umfasst.

7. Optische Positionsmesseinrichtung nach Anspruch 5, wobei die Messteilung (211; 511) eine zweidimensionale Anordnung von Teilungsbereichen (211.1, 211.2; 511.1, 511.2) mit unterschiedlichen Reflektivitäten entlang der Messrichtung (x) und senkrecht zur Messrichtung (x) umfasst.

8. Optische Positionsmesseinrichtung nach Anspruch 5, wobei die Messteilung (311; 611) als Pseudo Random Code ausgebildet ist und eine eindimensionale, aperiodische Anordnung von rechteckförmigen oder kreisringsektorförmigen Teilungsbereichen (311.1, 311.2; 611.1, 611.2) mit unterschiedlichen Reflektivitäten entlang der Messrichtung (x) umfasst.

9. Optische Positionsmesseinrichtung nach mindestens einem der Ansprüche 1 - 8, wobei die Detektoranordnung (22; 122; 222; 322; 422)

   - entweder eine eindimensionale Anordnung von rechteckförmigen oder kreisringsektorförmigen Detektorelementen (122.i; 322.i) umfasst, die entlang der Messrichtung (x) benachbart zueinander angeordnet sind, wobei die Längsachsen der Detektorelemente (122.i; 322.i) senkrecht zur Messrichtung (x) orientiert sind, oder
   - eine zweidimensionale Anordnung von Detektorelementen (222.i; 422.i) umfasst, die entlang der Messrichtung (x) als auch senkrecht zur Messrichtung (x) benachbart zueinander angeordnet sind.

10. Optische Positionsmesseinrichtung nach mindestens einem der Ansprüche 1 - 9, wobei die Lichtquelle (21) und die Detektoranordnung (22; 122; 222; 322; 422) in einer zur Messteilung (11; 111; 211; 311; 411; 511; 611) parallelen Ebene angeordnet sind.

11. Verfahren zum Betrieb einer optischen Positionsmesseinrichtung, über die die Position eines ersten Objekts (O1) gegenüber einem entlang einer Messrichtung (x) beweglichen zweiten Objekt (O2) bestimmt wird, wobei

   - eine mit dem ersten Objekt (O1) verbundene Maßverkörperung (10) mit einer sich entlang der Messrichtung (x) erstreckenden, reflektiven Messteilung (11; 111; 211; 311; 411; 511; 611), die Teilungsbereiche mit unterschiedlichen Reflektivitäten aufweist, bereitgestellt wird, und
   - eine Abtasteinheit (20), welche mit dem zweiten Objekt (O2) verbunden und in einem Abtastabstand ($Z_A$) gegenüber der Maßverkörperung (10) angeordnet ist, bereitgestellt wird, wobei die Abtasteinheit (20)

      - mindestens eine Lichtquelle (21), und
      - eine Detektoranordnung (22; 122; 222; 322; 422) umfasst, die eine Vielzahl von optoelektronischen Detektorelementen (122.i; 222.i; 322.i; 422.i) aufweist, die periodisch entlang der Messrichtung (x) angeordnet sind, sowie

      - einer der Abtasteinheit (20) zugeordneten Signalverarbeitungseinheit (24), wobei über die Signalverarbeitungseinheit (24)

         - aus den über die Detektorelemente (122.i; 222.i; 322.i; 422.i) erzeugten Photoströmen ($I_i$) Positionssignale

($S_P$) bezüglich der Position des ersten Objekts (O1) gegenüber dem zweiten Objekt (O2) erzeugt werden, und

- ein Gesamt-Photostrom ($I_{ges,MB}$, $I_{ges,RB}$) in einem Detektor-Mittelbereich (MB) und in mindestens einem Detektor-Randbereich (RB) ermittelt wird und aus dem gebildeten Photostrom-Verhältnis ($V_I$) der Gesamt-Photoströme ($I_{ges,MB}$, $I_{ges,RB}$) im Detektor-Mittelbereich (MB) und im Detektor-Randbereich (RB) der Abtastabstand ($Z_A$) bestimmt wird.

12. Verfahren nach Anspruch 11, wobei die Signalverarbeitungseinheit (24) zur Bildung des Photostrom-Verhältnisses ($V_I$) Kopien der für die Erzeugung der Positionssignale ($S_P$) herangezogenen Photoströme ($I_i$) nutzt.

13. Verfahren nach einem der Ansprüche 11 oder 12, wobei die Signalverarbeitungseinheit (24) im Messbetrieb eine Mehrzahl von Photostrom-Verhältnissen ($V_I$) ermittelt, darüber eine Mittelwertbildung vornimmt und aus dem gemittelten Photostrom-Verhältnis ($ØV_I$) den Abtastabstand ($Z_A$) bestimmt.

14. Verfahren nach Anspruch mindestens einem der Ansprüche 11 - 13, wobei die Signalverarbeitungseinheit (24) den Abtastabstand ($Z_A$)

- entweder aus einer analytischen Beziehung ermittelt,
oder
- aus einer in der Signalverarbeitungseinheit (24) abgelegten Tabelle ermittelt, die den Zusammenhang zwischen dem bestimmten Photostrom-Verhältnis ($V_I$) und dem Abtastabstand ($Z_A$) beschreibt.

15. Verfahren nach mindestens einem der Ansprüche 11 - 14, wobei die Signalverarbeitungseinheit (24) zur Bildung des Photostrom-Verhältnisses ($V_I$) im Detektor-Mittelbereich (MB) doppelt so viele Detektorelemente (122.i; 222.i; 322.i; 422.i) heranzieht wie in zwei symmetrisch zur Detektormitte liegenden Detektor-Randbereichen (RB).


**Claims**

1. Optical position measurement device for determining the position of a first object (01) that is movable in relation to a second object (O2) along a measurement direction (x), having

- a material measure (10), which is connected to the first object (01), with a reflective measurement graduation (11; 111; 211; 311; 411; 511; 611) which extends along the measurement direction (x) and has graduation regions (11.1, 11.2; 111.1, 111.2; 211.1, 211.2; 311.1, 311.2; 411.1, 411.2; 511.1, 511.2; 611.1, 611.2) with different reflectivities, and
- a sampling unit (20), which is connected to the second object (O2) and is arranged at a sampling distance ($Z_A$) from the material measure (10), having
- at least one light source (21), and
- a detector arrangement (22; 122; 222; 322; 422) comprising a multiplicity of optoelectronic detector elements (122.i; 222.i; 322.i; 422.i) which are arranged periodically along the measurement direction (x), and also
- a signal processing unit (24), which is assigned to the sampling unit (20) and is designed and configured

- to generate from the photocurrents ($I_i$) generated via the detector elements (122.i; 222.i; 322.i; 422.i) position signals ($S_P$) with respect to the position of the first object (01) in relation to the second object (O2) and
- to ascertain a total photocurrent ($I_{ges,MB}$, $I_{ges,RB}$) in a detector central region (MB) and in at least one detector peripheral region (RB) and to determine the sampling distance ($Z_A$) from the formed photocurrent ratio ($V_I$) of the total photocurrents ($I_{ges,MB}$, $I_{ges,RB}$) in the detector central region (MB) and in the detector peripheral region (RB).

2. Optical position measurement device according to Claim 1, wherein the signal processing unit (24) is designed and configured to use copies of the photocurrents ($I_i$) utilized for generating the position signals ($S_P$) to form the photocurrent ratio ($V_I$) .

3. Optical position measurement device according to Claim 1 or 2, wherein the signal processing unit (24) is designed and configured to ascertain a plurality of photocurrent ratios ($V_I$) during measurement operation, to form a mean value over them and to determine the sampling distance ($Z_A$) from the averaged photocurrent ratio ($0Vi$) .

4.  Optical position measurement device according to at least one of Claims 1-3, wherein the signal processing unit (24) is designed and configured to

    - either ascertain the sampling distance ($Z_A$) from an analytical relationship or
    - to ascertain the sampling distance ($Z_A$) from a table stored in the signal processing unit (24), with the table describing the relationship between the determined photocurrent ratio ($V_I$) and the sampling distance ($Z_A$).

5.  Optical position measurement device according to at least one of Claims 1-4, wherein the measurement graduation (11; 111; 211; 311; 411; 511; 611) consists of measurement graduation unit cells (112; 212; 312; 412; 512; 612) in which the area ratio ($V_F$) of the summed areas ($F_{TB1}$) of one category of graduation regions to the total unit cell area ($F_{GES}$) is constant and for the area ratio ($V_F$) the relationship $0 < V_F = F_{HR} / F_{TB1} < 1$ applies, with

    $V_F$ := area ratio
    $F_{TB1}$ := summed areas of one category of graduation regions
    $F_{GES}$ := total unit cell area.

6.  Optical position measurement device according to Claim 5, wherein the measurement graduation (11; 111; 411) is designed as an incremental graduation which comprises a one-dimensional alternating arrangement of rectangular or circular-ring-sector-shaped graduation regions (11.1, 11.2; 111.1, 111.2; 411.1, 411.2) having different reflectivities along the measurement direction (x).

7.  Optical position measurement device according to Claim 5, wherein the measurement graduation (211; 511) comprises a two-dimensional arrangement of graduation regions (211.1, 211.2; 511.1, 511.2) having different reflectivities along the measurement direction (x) and perpendicular to the measurement direction (x).

8.  Optical position measurement device according to Claim 5, wherein the measurement graduation (311; 611) is designed as a pseudo random code and comprises a one-dimensional, aperiodic arrangement of rectangular or circular-ring-sector-shaped graduation regions (311.1, 311.2; 611.1, 611.2) having different reflectivities along the measurement direction (x).

9.  Optical position measurement device according to at least one of Claims 1-8, wherein the detector arrangement (22; 122; 222; 322; 422) comprises

    - either a one-dimensional arrangement of rectangular or circular-ring-sector-shaped detector elements (122.i; 322.i) arranged adjacent to one another along the measurement direction (x), wherein the longitudinal axes of the detector elements (122.i; 322.i) run perpendicular to the measurement direction (x),
    or
    - a two-dimensional arrangement of detector elements (222.i; 422.i) arranged adjacent to one another both along the measurement direction (x) and also perpendicular to the measurement direction (x).

10. Optical position measurement device according to at least one of Claims 1-9, wherein the light source (21) and the detector arrangement (22; 122; 222; 322; 422) are arranged in a plane parallel to the measurement graduation (11; 111; 211; 311; 411; 511; 611).

11. Method for operating an optical position measurement device via which the position of a first object (01) in relation to a second object (O2), which is movable along a measurement direction (x), is determined, wherein

    - a material measure (10), which is connected to the first object (01), with a reflective measurement graduation (11; 111; 211; 311; 411; 511; 611) which extends along the measurement direction (x) and has graduation regions with different reflectivities, is provided, and
    - a sampling unit (20), which is connected to the second object (O2) and is arranged at a sampling distance ($Z_A$) with respect to the material measure (10), is provided, wherein the sampling unit (20) comprises
    - at least one light source (21), and
    - a detector arrangement (22; 122; 222; 322; 422), which has a multiplicity of optoelectronic detector elements (122.i; 222.i; 322.i; 422.i) which are arranged periodically along the measurement direction (x), and also
    - a signal processing unit (24), which is assigned to the sampling unit (20), wherein the signal processing unit (24) is used

EP 4 174 447 B1

- to generate from the photocurrents ($I_i$) generated via the detector elements (122.i; 222.i; 322.i; 422.i) position signals ($S_P$) with respect to the position of the first object (01) in relation to the second object (O2) and
- to ascertain a total photocurrent ($I_{ges,MB}$, $I_{ges,RB}$) in a detector central region (MB) and in at least one detector peripheral region (RB) and to determine the sampling distance ($Z_A$) from the formed photocurrent ratio ($V_I$) of the total photocurrents ($I_{ges,MB}$, $I_{ges,RB}$) in the detector central region (MB) and in the detector peripheral region (RB).

12. Method according to Claim 11, wherein the signal processing unit (24) uses photocurrents ($I_i$) utilized for generating the position signals ($S_P$) to form the photocurrent ratio ($V_I$).

13. Method according to either of Claims 11 and 12, wherein the signal processing unit (24) ascertains a plurality of photocurrent ratios ($V_I$) during measurement operation, to form a mean value over them and to determine the sampling distance ($Z_A$) from the averaged photocurrent ratio ($ØV_I$).

14. Method according to at least one of Claims 11-13, wherein the signal processing unit (24)

- either ascertains the sampling distance ($Z_A$) from an analytical relationship or
- ascertains the sampling distance ($Z_A$) from a table stored in the signal processing unit (24), with the table describing the relationship between the determined photocurrent ratio ($V_I$) and the sampling distance ($Z_A$) .

15. Method according to at least one of Claims 11-14, wherein the signal processing unit (24) uses twice as many detector elements (122.i; 222.i; 322.i; 422.i) to form the photocurrent ratio ($V_I$) in the detector central region (MB) than in two detector peripheral regions (RB) lying symmetrically with respect to the detector centre.

**Revendications**

1. Dispositif de mesure de position optique destiné à déterminer la position d'un premier objet (01), qui est mobile par rapport à un deuxième objet (02) suivant une direction de mesure (x), ledit dispositif comprenant

- un étalon (10) qui est relié au premier objet (01) et qui est pourvu d'une graduation de mesure réfléchissante (11 ; 111 ; 211 ; 311 ; 411 ; 511 ; 611) qui s'étend suivant la direction de mesure (x) et qui comporte des zones de graduation (11.1, 11.2 ; 111.1, 111.2 ; 211.1, 211.2 ; 311.1, 311.2 ; 411.1, 411.2 ; 511.1, 511.2 ; 611.1, 611.2) de différentes réflectivités, et
- une unité de balayage (20) qui est reliée au deuxième objet (O2) et qui est disposée à une distance de balayage ($Z_A$) de l'étalon (10), ladite unité de balayage comprenant
- au moins une source de lumière (21), et
- un agencement de détecteurs (22 ; 122 ; 222 ; 322 ; 422), qui comprend un grand nombre d'éléments détecteurs optoélectroniques (122.i ; 222.i ; 322.i ; 422.i) qui sont disposés périodiquement suivant la direction de mesure (x), ainsi que
- une unité de traitement de signal (24) qui est associée à l'unité de balayage (20) et qui est conçue et adaptée pour
- générer des signaux de position (Sp), relatifs à la position du premier objet (01) par rapport au deuxième objet (O2), à partir des photo-courants ($I_i$) générés par les éléments détecteurs (122.i ; 222.1 ; 322.i ; 422.1), et
- déterminer un photo-courant total ($I_{ges,MB}$, $I_{ges,RB}$) dans une zone de détecteur centrale (MB) et dans au moins une zone de détecteur marginale (RB) et pour déterminer la distance de balayage ($Z_A$) à partir du rapport de photo-courant formé ($V_I$) des photo-courants totaux ($I_{ges, MB}$, $I_{ges,RB}$) dans la zone de détecteur centrale (MB) et dans la zone de détecteur marginale (RB) .

2. Dispositif de mesure de position optique selon la revendication 1, l'unité de traitement de signal (24) étant conçue et adaptée pour utiliser des copies des photo-courants ($I_i$) utilisés pour générer les signaux de position ($S_P$) afin de former le rapport de photo-courants ($V_I$).

3. Dispositif de mesure de position optique selon la revendication 1 ou 2, l'unité de traitement de signal (24) étant conçue et adaptée pour déterminer une pluralité de rapports de photo-courants ($V_I$) pendant une opération de mesure, pour calculer une valeur moyenne sur ceux-ci et pour déterminer la distance de balayage (Za) à partir du rapport de photo-courants moyen ($ØV_I$).

4. Dispositif de mesure de position optique selon l'une au moins des revendications 1 à 3, l'unité de traitement de signal (24) étant conçue et adaptée pour déterminer la distance de balayage ($Z_A$)

- à partir d'une relation analytique, ou bien
- à partir d'un tableau qui est stocké dans l'unité de traitement de signal (24) et qui décrit la relation entre le rapport de photo-courants déterminé ($V_I$) et la distance de balayage ($Z_A$).

5. Dispositif de mesure de position optique selon l'une au moins des revendications 1 à 4, la graduation de mesure (11 ; 111 ; 211 ; 311 ; 411 ; 511 ; 611) comprenant des cellules de graduation de mesure élémentaires (112 ; 212 ; 312 ; 412 ; 512 ; 612) dans lesquelles le rapport de surface ($V_F$) des surfaces sommées ($F_{TB1}$) d'une catégorie de zones de graduation par rapport à la surface de cellule élémentaire totale ($F_{GES}$) est constante et pour le rapport de surface ($V_F$) la relation

$$0 < V_F = F_{HR}/F_{TB1} < 1 \text{ s'applique,}$$

avec

$V_F$ := rapport de surface
$F_{TB1}$ := surfaces sommées d'une catégorie de zones de graduation
$F_{GES}$ := surface de cellule élémentaire totale

6. Dispositif de mesure de position optique selon la revendication 5, la graduation de mesure (11 ; 111 ; 411) étant réalisée sous forme de graduation incrémentale, qui comprend un agencement alterné unidimensionnel de zones de graduation (11.1, 11.2 ; 111.1, 111.2 ; 411.1, 411.2) en forme de rectangle ou en forme de secteur de cercle de différentes réflectivités suivant la direction de mesure (x).

7. Dispositif de mesure de position optique selon la revendication 5, la graduation de mesure (211 ; 511) comprenant un agencement bidimensionnel de zones de graduation (211.1, 211.2 ; 511.1, 511.2) de différentes réflectivités suivant la direction de mesure (x) et perpendiculairement à la direction de mesure (x).

8. Dispositif de mesure de position optique selon la revendication 5, la graduation de mesure (311 ; 611) étant conçue comme un code pseudo-aléatoire et comprenant un agencement apériodique unidimensionnel de zones de graduation (311.1, 311.2 ; 611.1, 611.2) en forme de rectangle ou en forme de secteur de cercle et ayant différentes réflectivités suivant la direction de mesure (X).

9. Dispositif de mesure de position optique selon l'une au moins des revendications 1 à 8, l'agencement de détecteurs (22 ; 122 ; 222 ; 322 ; 422) comprenant

- un agencement unidimensionnel d'éléments détecteurs (122.i ; 322.1) en forme de rectangle ou en forme de secteur de cercle, qui sont disposés les uns à côté des autres suivant la direction de mesure (x), les axes longitudinaux des éléments détecteurs (122.i ; 322.i) étant orientés perpendiculairement à la direction de mesure (x), ou
- un agencement bidimensionnel d'éléments détecteurs (222.i ; 422.i) qui sont disposés les uns à côté des autres suivant la direction de mesure (x) et perpendiculairement à la direction de mesure (x).

10. Dispositif de mesure de position optique selon l'une au moins des revendications 1 à 9, la source de lumière (21) et l'agencement de détecteurs (22 ; 122 ; 222 ; 322 ; 422) étant disposés dans un plan parallèle à la graduation de mesure (11 ; 111 ; 211 ; 311 ; 411 ; 511 ; 611).

11. Procédé de fonctionnement d'un dispositif de mesure de position optique permettant de déterminer la position d'un premier objet (01) par rapport à un deuxième objet (O2) mobile suivant une direction de mesure (x),

- un étalon (10) qui est relié au premier objet (01) et qui est pourvu d'une graduation de mesure réfléchissante (11 ; 111 ; 211 ; 311 ; 411 ; 511 ; 611) qui s'étend suivant la direction de mesure (x) et qui comporte des zones de graduation de différentes réflectivités, et
- une unité de balayage (20) qui est reliée au deuxième objet (O2) et qui est disposée à une distance de balayage ($Z_A$) de l'étalon (10), ladite unité de balayage (20) comprenant
- au moins une source de lumière (21), et

- un agencement de détecteurs (22 ; 122 ; 222 ; 322 ; 422), qui comprend un grand nombre d'éléments détecteurs optoélectroniques (122.i ; 222.i ; 322.i ; 422.i) qui sont disposés périodiquement suivant la direction de mesure (x), ainsi que

- une unité de traitement de signal (24) qui est associée à l'unité de balayage (20), l'unité de traitement de signal (24) étant conçue et adaptée pour

- générer des signaux de position (Sp), relatifs à la position du premier objet (01) par rapport au deuxième objet (O2), à partir des photo-courants ($I_i$) générés par les éléments détecteurs (122.i ; 222.1 ; 322. i ; 422.i), et

- déterminer un photo-courant total ($I_{ges,MB}$, $I_{ges,RB}$) dans une zone de détecteur centrale (MB) et dans au moins une zone de détecteur marginale (RB) et pour déterminer la distance de balayage ($Z_A$) à partir du rapport de photo-courant formé ($V_I$) des photo-courants totaux ($I_{ges, MB}$, $I_{ges,RB}$) dans la zone de détecteur centrale (MB) et dans la zone de détecteur marginale (RB) .

**12.** Procédé selon la revendication 11, l'unité de traitement de signal (24) utilisant des copies des photo-courants ($I_i$) utilisés pour générer les signaux de position ($S_P$) pour former le rapport de photo-courants ($V_I$) -

**13.** Procédé selon l'une des revendications 11 ou 12, l'unité de traitement de signal (24) déterminant une pluralité de rapports de photo-courants ($V_I$) pendant l'opération de mesure, calculant une valeur moyenne sur ceux-ci et déterminant la distance de balayage ($Z_A$) à partir du rapport de photo-courants moyen ($\emptyset V_I$).

**14.** Procédé selon l'une au moins des revendications 11 à 13, l'unité de traitement de signal (24) déterminant la distance de balayage ($Z_A$)

- à partir d'une relation analytique, ou bien
- à partir d'un tableau qui est stocké dans l'unité de traitement de signal (24) et qui décrit la relation entre le rapport de photo-courants déterminé ($V_I$) et la distance de balayage ($Z_A$).

**15.** Procédé selon l'une au moins des revendications 11 à 14, pour former le rapport de photo-courants ($V_I$), l'unité de traitement de signal (24) utilisant deux fois plus d'éléments détecteurs (122.i ; 222.1 ; 322.i ; 422.i) dans la zone de détecteur centrale (MB) que dans deux zones de détecteur marginales (RB) situées symétriquement par rapport au centre de détecteur.

# FIG. 1

# FIG. 2

# FIG. 3

FIG. 4a

FIG. 4b

FIG. 4c

FIG. 5a

FIG. 5b

FIG. 5c

FIG. 6a

FIG. 6b

FIG. 7a

FIG. 7b

# FIG. 8

S100

Erzeugung von Photoströmen $I_i$ in Detektoranordnung

• • •

Ermittlung von Gesamt-Photoströmen $I_{ges,MB}$, $I_{ges,RB}$ im Detektor-Mittelbereich und Detektor-Randbereich aus den Photoströmen $I_i$ — S120

Erzeugung von Positionssigalen $S_p$ aus den Photoströmen $I_i$ — S110

Bildung eines Photostrom-Verhältnisses $V_I$ aus den Gesamt-Photoströmen $I_{ges,MB}$, $I_{ges,RB}$ — S130

Bestimmung des Abtastabstands $Z_A$ aus dem Photostrom-Verhältnis $V_I$ — S140

30 — 24

$S_P$, $Z_A$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2001174287 A
- JP 2013113634 A
- JP 2016050886 A
- DE 102018104280 A1
- EP 2738524 A1
- EP 3511680 A1